# EUROPÄISCHE PATENTSCHRIFT

(11) **EP 2 854 106 B1**
(45) Veröffentlichungstag und Bekanntmachung des Hinweises auf die Patenterteilung: **22.02.2017**
(21) Anmeldenummer: 14182559.6
(22) Anmeldetag: 28.08.2014
(51) Int. Cl.: G06T 7/00

(54) **3D-Kamera nach dem Stereoskopieprinzip und Verfahren zum Erfassen von Tiefenkarten**
3D camera according to the stereoscopy principle and method for recording depth maps
Caméra 3D selon le principe de stéréoscopie et procédé de référencement de cartes topographiques

(30) Priorität: 26.09.2013 DE 102013110615
(43) Veröffentlichungstag der Anmeldung: 01.04.2015
(73) Patentinhaber: SICK AG, 79183 Waldkirch (DE)
(72) Erfinder: Zierke, Volker, 79312 Emmendingen (DE); Heinz, Matthias, 79117 Freiburg (DE)
(74) Vertreter: Hehl, Ulrich

(56) Entgegenhaltungen:
- WO-A1-2013/002280
- DUBBELMAN G ET AL: "Obstacle detection during day and night conditions using stereo vision", INTELLIGENT ROBOTS AND SYSTEMS, 2007. IROS 2007. IEEE/RSJ INTERNATIONAL CONFERENCE ON, IEEE, PISCATAWAY, NJ, USA, 29. Oktober 2007 (2007-10-29), Seiten 109-116, XP031222054, ISBN: 978-1-4244-0911-2
- NARASIMHA RAJESH ET AL: "Method for enhancing low quality depth maps for 3D reconstruction on a embedded platform", 2013 IEEE INTERNATIONAL CONFERENCE ON ACOUSTICS, SPEECH AND SIGNAL PROCESSING (ICASSP); VANCOUCER, BC; 26-31 MAY 2013, INSTITUTE OF ELECTRICAL AND ELECTRONICS ENGINEERS, PISCATAWAY, NJ, US, 26. Mai 2013 (2013-05-26), Seiten 1538-1542, XP032508044, ISSN: 1520-6149, DOI: 10.1109/ICASSP.2013.6637909 [gefunden am 2013-10-18]
- ANDY MOTTEN ET AL: "Binary confidence evaluation for a stereo vision based depth field processor SoC", PATTERN RECOGNITION (ACPR), 2011 FIRST ASIAN CONFERENCE ON, IEEE, 28. November 2011 (2011-11-28), Seiten 456-460, XP032130049, DOI: 10.1109/ACPR.2011.6166593 ISBN: 978-1-4577-0122-1
- YONG ZHAO ET AL: "Real-time stereo on GPGPU using progressive multi-resolution adaptive windows", IMAGE AND VISION COMPUTING, ELSEVIER, GUILDFORD, GB, Bd. 29, Nr. 6, 27. Januar 2011 (2011-01-27), Seiten 420-432, XP028159815, ISSN: 0262-8856, DOI: 10.1016/J.IMAVIS.2011.01.007 [gefunden am 2011-02-16]
- RUIGANG YANG ET AL: "Multi-resolution real-time stereo on commodity graphics hardware", PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, Bd. 1, 18. Juni 2003 (2003-06-18), Seiten 211-217, XP010644900, DOI: 10.1109/CVPR.2003.1211356 ISBN: 978-0-7695-1900-5
- RUEIHUNG LI ET AL: "Disparity search range estimation based on dense stereo matching", INDUSTRIAL ELECTRONICS AND APPLICATIONS (ICIEA), 2013 8TH IEEE CONFERENCE ON, IEEE, 19 June 2013 (2013-06-19), pages 753-759, XP032442152, DOI: 10.1109/ICIEA.2013.6566468 ISBN: 978-1-4673-6320-4
- STEFAN POSCH: "Hierarchische linienbasierte Tiefenbestimmung in einem Stereobild", KÜNSTLICHE INTELLIGENZ: GWAI-88, 12. JAHRESTAGUNG ERINGERFELD, 19-23. SEPTEMBER 1988 PROCEEDINGS (INFORMATIK-FACHBERICHTE), September 1988 (1988-09), pages 275-285, XP009184993,

## Beschreibung

Die Erfindung betrifft eine 3D-Kamera nach dem Stereoskopieprinzip und ein Verfahren zum Erfassen von Tiefenkarten nach dem Oberbegriff von Anspruch 1 beziehungsweise 10.

Im Gegensatz zu einer herkömmlichen Kamera nimmt eine 3D-Kamera auch eine Tiefeninformation auf und erzeugt somit dreidimensionale Bilddaten mit Abstands- oder Entfernungswerten für die einzelnen Pixel des 3D-Bildes, das auch als Entfernungsbild oder Tiefenkarte bezeichnet wird. Die zusätzliche Entfernungsdimension lässt sich in einer Vielzahl von Anwendungen nutzen, um mehr Informationen über Objekte in der von der Kamera erfassten Szenerie zu gewinnen und so verschiedene Aufgaben im Bereich der Industriesensorik zu lösen.

In der Automatisierungstechnik können anhand dreidimensionaler Bildinformationen Objekte erfasst und klassifiziert werden, um weitere automatische Bearbeitungsschritte davon abhängig zu machen, welche Objekte vorzugsweise einschließlich ihrer Position und Orientierung erkannt wurden. Damit kann beispielsweise die Steuerung von Robotern oder verschiedenartigen Aktoren an einem Förderband unterstützt werden. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt.

In mobilen Anwendungen, seien es Fahrzeuge mit Fahrer wie PKW, LKW, Arbeitsmaschinen oder Gabelstapler oder führerlose Fahrzeuge wie AGVs (Automated Guided Vehicle) oder Flurförderzeuge, soll die Umgebung und insbesondere ein geplanter Fahrweg möglichst vollständig und dreidimensional erfasst werden. Damit soll die autonome Navigation ermöglicht oder ein Fahrer unterstützt werden, um unter anderem Hindernisse zu erkennen, Kollisionen zu vermeiden oder das Be- und Entladen von Transportgütern einschließlich Kartons, Paletten, Containern oder Anhängern zu erleichtern.

Ein bekanntes Verfahren zur Ermittlung der Tiefeninformationen ist die an das menschliche Sehen mit zwei Augen angelehnte Stereoskopie. Hierzu wird von zwei Kameras mit unterschiedlicher Perspektive ein Bildpaar aufgenommen, und darin werden zueinander korrespondierende Pixel beziehungsweise Bildelemente identifiziert. Deren als Disparität bezeichneter gegenseitiger Versatz stellt ein Maß für die Entfernung dar, so dass in Kenntnis der optischen Parameter der Stereokamera die jeweilige Entfernung durch Triangulation berechnet werden kann. Stereosysteme können passiv, also allein mit dem Umgebungslicht arbeiten, oder eine eigene Beleuchtung aufweisen, die vorzugsweise ein Beleuchtungsmuster erzeugt, um die Entfernungsschätzung auch in strukturlosen Szenerien zu ermöglichen.

Der Zusammenhang zwischen der Entfernung eines Objekts und der zugehörigen Disparität ist nicht linear, sondern hyperbelförmig. Deshalb nimmt die relative Verschiebung der korrespondierenden Bildelemente im Nahbereich sehr stark zu. Dementsprechend besitzt eine Stereokamera mit üblichen Bildsensoren, welche die Szenerie äquidistant abtasten, im Nahfeld eine sehr viel feinere Entfernungsauflösung als im Fernfeld.

Bei der Suche nach korrespondierenden Bildelementen wird durch einen als Disparitätsbereich bezeichneten Suchbereich festgelegt, wie weit die Bildelemente in den beiden Bildern maximal auseinander liegen können. Der Disparitätsbereich entspricht dem erfassbaren Entfernungsbereich der Stereokamera: Ein größerer Disparitätsbereich führt folglich zu einem größeren, stärker ausgedehnten Entfernungsbereich, benötigt aber auch mehr Auswertungskapazitäten.

Die sehr hohe Entfernungsauflösung im Nahbereich der Stereokamera wird aber praktisch häufig gar nicht benötigt. Aufgrund des reziproken Zusammenhangs zwischen Entfernung und Disparität entfällt jedoch ein Großteil des Auswertungsaufwands bei der Bestimmung von Pixel- oder Bildelementkorrespondenzen auf den Nahbereich. Um echtzeitfähig und effizient zu arbeiten, können Stereoskopiealgorithmen auf einem zur Parallelverarbeitung fähigen Baustein implementiert sein, wie einem FPGA (Field Programmable Gate Array). Dadurch werden verschiedene Bildausschnitte gleichzeitig bearbeitet. Es sind dabei aber überproportional viele Ressourcen, wie Gatter oder Speicher, für die Verarbeitung des Nahbereichs zuständig und damit gebunden.

Die Arbeit G. Dubbelmann et al. "Obstacle detecion during day and night conditions using stereo vision", Proceedings of the 2007 IEEE/RJS International Conference on Intelligent Robots and Systems, 29.10.-11.02.2007, S. 109-116 offenbart ein Verfahren zur Gewinnung von Tiefenkarten, in dem eine sogenannte Stereopyramide mit Disparitätskarten unterschiedlicher Auflösung verwendet wird. Dazu werden die Ausgangsbilder wiederholt um 65 % verkleinert und dazu jeweils eine Disparitätskarte berechnet. Anschließend wird aus den Disparitätskarten eine gemeinsame Disparitätskarte zusammengesetzt, wobei in einem Fein-nach-Grob-Ansatz die Disparität aus der höchstaufgelösten Disparitätskarte übernommen wird, deren Schätzung ein bestimmtes Gütemaß erfüllt.

In dem Artikel R. Narasima et al. "Method for enhancing low quality depth maps for 3D reconstruction on an embedded platform", International Conference on Acoustics, Speech and Signal Processing (ICASSP), 26.05.-31.05.2013, S. 1538-1542 ist ein ähnlicher Ansatz zur Gewinnung von Tiefenkarten auf Basis von mehreren Auflösungen bekannt. Dabei werden Disparitätskarten beispielsweise in VGA-Auflösung von 640x480 und verringerten Auflösungen von 320x240 beziehungsweise 160x120 berechnet. Anschließend werden etwaige Löcher in der höchstauflösenden Disparitätskarte aus den Disparitätskarten mit niedrigerer Auflösung gefüllt. In einem Vorabschritt wird der Disparitätsbereich beschränkt, indem das nächste Objekt in der Szenerie bestimmt und dessen Disparität geschätzt wird.

Aus der WO 2013/002280A1 ist ein Stereoverfahren bekannt, das Bilder in mehrere Skalen transformiert, darauf basierend jeweils Disparitäten berechnet und anschließend die Ergebnisse kombiniert.

Es ist daher Aufgabe der Erfindung, ein effizienteres Stereoskopieverfahren anzugeben.

Diese Aufgabe wird durch eine 3D-Kamera nach dem Stereoskopieprinzip und ein Verfahren zum Erfassen von Tiefenkarten nach Anspruch 1 beziehungsweise 10 gelöst. Eine Tiefenkarte, also dreidimensionale Bilddaten beispielsweise in Form einer pixelaufgelösten Matrix von Entfernungswerten, wird durch einen Stereoskopiealgorithmus gebildet, der einander entsprechende Bildelemente in den beiden Bildern zweier Kameramodule etwa durch Korrelation erkennt und deren Entfernung aus der Disparität berechnet, d.h. dem gegenseitigen Pixelversatz. Korrespondenzen werden nur bis zu einem maximalen Versatz gesucht, den ein Disparitätsfenster vorgibt.

Die Erfindung geht nun von dem Grundgedanken aus, Nah- und Fernbereich unterschiedlich zu behandeln. Dazu werden aus den aufgenommenen Bildern zunächst Zwischenbilder einer geringeren Auflösung durch jeweiliges Zusammenfassen ("Binning") mehrerer Pixel erzeugt. Aus diesen Zwischenbildern wird durch den Stereoalgorithmus eine Tiefenkarte mit entsprechend reduzierter Auflösung gebildet, insbesondere reduzierter lateraler Auflösung. Dafür genügt wegen der verringerten Auflösung ein kleinerer Disparitätsbereich, als wenn die höher aufgelösten Ausgangsbilder im Nahbereich ausgewertet würden. Eine weitere Tiefenkarte wird aus den Ausgangsbildern oder zusätzlichen Zwischenbildern gewonnen, die gegenüber den zuerst betrachteten Zwischenbildern durch eine andere Zusammenfassung der Pixel eine andere Auflösung haben. Aus der Tiefenkarte reduzierter Auflösung und der weiteren Tiefenkarte wird eine gemeinsame Tiefenkarte fusioniert. In die gemeinsame Tiefenkarte gehen somit zwei Quellen ein: eine höher aufgelöste Tiefenkarte, deren Bereich vorzugsweise weitere Entfernungen abdeckt, und eine Tiefenkarte reduzierter Auflösung vorzugsweise für den Nahbereich und diesen insbesondere bündig ergänzend.

Die Erfindung hat den Vorteil, dass der Aufwand für die Auswertung im Nahbereich erheblich reduziert werden kann. Der Preis ist eine geringere Entfernungsauflösung im Nahbereich, die sich aber wegen der dort überproportional feinen Entfernungsauflösung praktisch nicht bemerkbar macht. Somit kann ein vorgegebener Entfernungsbereich mit deutlich reduziertem Hardware- beziehungsweise Rechenaufwand abgedeckt werden. Umgekehrt kann man bei festgelegten Ressourcen einen größeren auswertbaren Entfernungsbereich erzielen.

Es werden vorzugsweise mehr als zwei Kameramodule eingesetzt und deren Bilder paarweise ausgewertet. Dadurch werden Scheinkorrespondenzen von langgestreckten Strukturen verhindert, die parallel zur Verbindungslinie zweier Kameramodule angeordnet sind.

Die Stereoeinheit ist bevorzugt mehrkanalig aufgebaut, um parallel mindestens eine erste Tiefenkarte aus einem ersten Paar Bilder und eine zweite Tiefenkarte aus einem zweiten Paar Bilder zu berechnen. Dadurch wird die Gewinnung von Entfernungsdaten für Nah- und Fernbereich deutlich beschleunigt. Das erfindungsgemäße Verfahren kommt dem Zeitverhalten einer solchen Parallelverarbeitung entgegen. Denn auch für die Nahbereichsauswertung genügt aufgrund der Pixelzusammenfassung ein kleinerer Disparitätsbereich. Somit können insbesondere die Auswertungskanäle mit dem gleichen Disparitätsbereich arbeiten und sind damit leichter untereinander synchronisierbar. Prinzipiell ist auch eine serielle Verarbeitung der Ausgangs- oder Zwischenbilder zu Tiefenkarten denkbar. Vorzugsweise kann auch innerhalb der Auswertungskanäle eine weitergehende Parallelisierung vorgenommen werden, welche verschiedene Bildausschnitte gleichzeitig verarbeitet.

Die Pixelzusammenfassungseinheit ist bevorzugt dafür ausgebildet, jeweils rechteckige oder quadratische Nachbarschaftsbereiche von Pixeln zu einem Pixel zusammenzufassen. Dabei werden insbesondere jeweils Rechtecke von n*m oder Quadrate von n*n Pixeln der Ausgangsbilder zu jeweils einem Pixel der Zwischenbilder. Eine Auflösungshalbierung der Zwischenbilder beispielsweise wird durch ein Binning von je 2*2 Pixeln erreicht. Da der Korrelationskern des Stereoalgorithmus' häufig zeilenweise arbeitet, ist auch ein Binning von n*1 denkbar, also nur innerhalb der Bildzeile. Das Zwischenbild verliert dann aber nur in Zeilenrichtung an Auflösung und in Spaltenrichtung nicht.

Die Pixelzusammenfassungseinheit ist bevorzugt dafür ausgebildet, ein zusammengefasstes Pixel auf einen Mittelwert, Maximum, Minimum oder Median der zusammenzufassenden Pixel zu setzen. Der Wert des zusammengefassten Pixels ist noch allgemeiner eine vorgegebene Funktion der Werte der zusammenzufassenden Pixel. Diese Funktion sorgt dafür, dass das zusammengefasste Pixel die zusammenzufassenden Pixel möglichst gut repräsentiert. Dieser Sprachgebrauch geht von monochromatischen Bilddaten aus, beispielsweise Grauwert- beziehungsweise Helligkeitsbildern. Bei Farbbildern sind dementsprechend weitere Werte je Pixel in analoger Weise zu berücksichtigen.

Die Stereoskopieeinheit ist bevorzugt dafür ausgebildet, ein Verlässlichkeitsmaß für die berechneten Entfernungen zu bestimmen. Dieses Verlässlichkeitsmaß hängt insbesondere direkt mit einer Güte der Übereinstimmung zueinander korrespondierender Bildbereiche zusammen. Da die Korrespondenzen häufig über Korrelationen erkannt werden, wird ein entsprechender Korrelationskoeffizient mit wenig oder keinem Zusatzaufwand mitgeliefert. In nachgelagerten Auswertungen kann die Zuverlässigkeit der gemessenen Entfernungen eine wichtige Information darstellen.

Die Fusionseinheit ist bevorzugt dafür ausgebildet, in die gemeinsame Tiefenkarte jeweils die am zuverlässigsten bestimmte Entfernung aus den beiden Tiefenkarten zu übernehmen. Die Werte der gemeinsamen Tiefenkarte sind überbestimmt, wenn beide eingehenden Tiefenkarten einen Entfernungswert liefern. Dann wird nach dieser Ausführungsform das Verlässlichkeitsmaß als Entscheidungskriterium herangezogen, welcher Entfernungswert der bessere ist.

Die Fusionseinheit ist bevorzugt dafür ausgebildet, soweit vorhanden Entfernungen der am höchsten aufgelösten Tiefenkarte in die gemeinsame Tiefenkarte zu übernehmen und aus einer niedriger aufgelösten Tiefenkarte nur Lücken zu füllen. Durch die Pixelzusammenfassung verlieren die Zwischenbilder an Auflösung. Sofern also der Stereoalgorithmus mit den Ausgangsbildern oder den höchstaufgelösten verwendeten Zwischenbildern zu einer Entfernungsberechnung gelangt ist, sind diese Werte häufig die besseren. Mögliche Lücken werden dann durch die Tiefenkarte aus den niedriger aufgelösten Zwischenbildern ergänzt, in denen der Disparitätsbereich für näher liegende Objekte ausgelegt ist.

Denkbar ist auch die bevorzugte Verwendung der reduzierten Tiefenkarte des Nahbereichs, da in verschiedenen Anwendungen etwa der Sicherheitstechnik Objekte im Nahbereich eine größere Bedeutung haben. In dieser Variante werden die Lücken der reduzierten Tiefenkarte durch Werte der hochaufgelösten Tiefenkarte ergänzt.

Die Fusionseinheit ist bevorzugt dafür ausgebildet, die Auflösung einer Tiefenkarte durch Vervielfältigen von Pixeln zu erhöhen. Das ist ein Zwischenschritt, um bei der Fusionierung von Tiefenkarten mit gleicher Auflösung arbeiten zu können. Vereinfacht ausgedrückt wird damit das Zusammenfassen ("Binning") wieder umgekehrt, so gut das mit der reduzierten Information noch erreichbar ist ("Upsampling"). Eine einfache Möglichkeit der Auflösungserhöhung besteht darin, aus jedem Ausgangspixel der niedrig aufgelösten Tiefenkarte n*m Pixel mit dem Wert des Ausgangspixels zu erzeugen. Nachbearbeitungen, etwa zum Auffüllen von Objektstrukturen oder Glätten von Übergängen, sind denkbar.

Die Fusionseinheit ist bevorzugt dafür ausgebildet, drei oder mehr Tiefenkarten unterschiedlicher Auflösung zu fusionieren. Hier wird der Entfernungsbereich also nicht nur in einen Nah- und einen Fernbereich aufgeteilt, sondern es wird noch mindestens ein Zwischenbereich hinzugefügt, der durch Zwischenbilder mit einer anderen Auflösung abgedeckt wird. So können als drei in die Fusion eingehende Tiefenkarten solche aus den Ausgangsbildern, einem ersten Zwischenbildpaar mit erster Pixelzusammenfassung und einem zweiten Zwischenbildpaar mit zweiter Pixelzusammenfassung oder alternativ drei Zwischenbildpaare mit paarweise verschiedener Pixelzusammenfassung verwendet werden. Bei vier oder mehr in die Fusion eingehenden Tiefenkarten gilt Entsprechendes. Die jeweiligen Disparitäts- und damit Entfernungsbereiche sowie die Pixelzusammenfassungen sind vorzugsweise aufeinander abgestimmt, damit die gemeinsame Tiefenkarte insgesamt einen gewünschten Entfernungsbereich als Arbeitsbereich der 3D-Kamera abdeckt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Stereokamera;
- Fig. 2: eine schematische Darstellung der optischen Verhältnisse bei der Entfernungsschätzung mit einer Stereokamera;
- Fig. 3: das entfernungsabhängige Verhalten der Disparität und der Auflösung bei einheitlicher Auswertung der Ausgangsbilder einer Stereokamera;
- Fig. 4: ein Blockdiagramm einer Stereoauswertung mit einem zusätzlichen Tiefenbild aus durch Pixelzusammenfassung entstandenen Zwischenbildern und anschließender Fusionierung;
- Fig. 5: eine Darstellung ähnlich Figur 3 des entfernungsabhängigen Verhaltens der Disparität und der Auflösung bei zweigeteilter Auswertung von Ausgangsbildern und Zwischenbildern;
- Fig. 6a: ein Ausgangsbild und eine Tiefenkarte bei einheitlicher Auswertung; und
- Fig. 6b: ein Ausgangsbild, ein daraus durch Pixelzusammenfassung erzeugtes Zwischenbild, die jeweiligen Tiefenkarten entsprechend dem Ausgangsbild und dem Zwischenbild sowie eine nach Fusion der Tiefenkarten erhaltene gemeinsame Tiefenkarte.

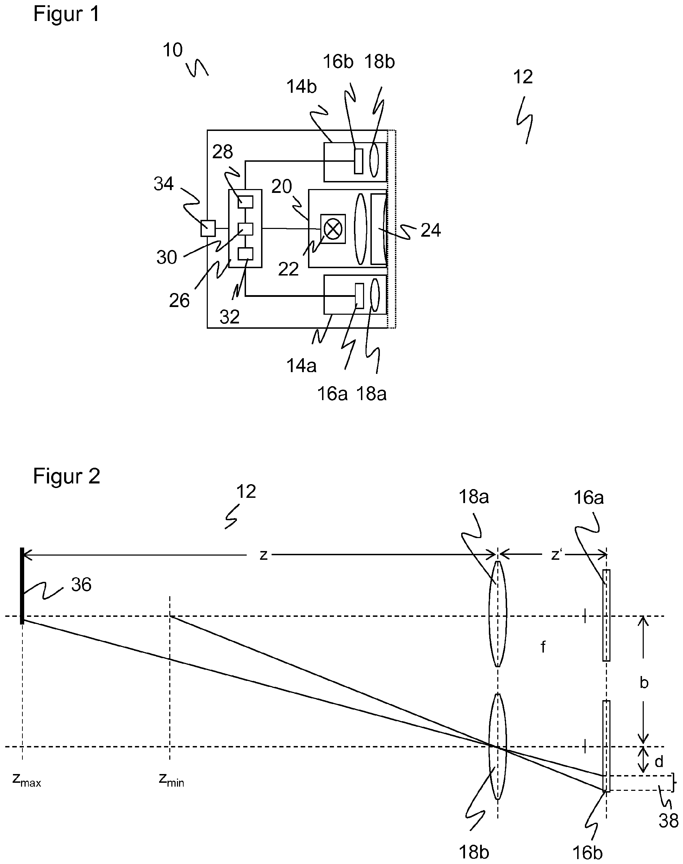

Figur 1 zeigt in einer Blockdarstellung den Aufbau einer 3D-Kamera 10 zur Aufnahme von Tiefenkarten eines Überwachungs- oder Raumbereichs 12. Darin sind zwei Kameramodule 14a-b in einem bekannten festen Abstand zueinander montiert und nehmen jeweils Bilder des Raumbereichs 12 auf. In jeder Kamera ist ein Bildsensor 16a-b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a-b ist jeweils ein Objektiv mit einer abbildenden Optik zugeordnet, welches als Linse 18a-b dargestellt ist und in der Praxis als jede bekannte Abbildungsoptik realisiert sein kann. Zwischen den beiden Kameramodulen 14a-b ist eine optionale Beleuchtungseinheit 20 mit einer Lichtquelle 22 dargestellt, deren räumliche Anordnung nur als Beispiel zu verstehen ist.

Mit den beiden Bildsensoren 16a-b und der Beleuchtungseinheit 20 ist eine kombinierte Auswertungs- und Steuerungseinheit 26 mit einer Stereoskopieeinheit 28, einer Pixelzusammenfassungseinheit 30 und einer Fusionseinheit 32 verbunden. Darin wird in einer noch zu beschreibenden Weise aus den Bilddaten der Bildsensoren 16a-b mit einem Stereoskopiealgorithmus ein dreidimensionales Bild (Entfernungsbild, Tiefenkarte) des Raumbereichs 12 erzeugt. Die Auswertungs- und Steuerungseinheit 26 kann einen oder mehrere digitale Bausteine umfassen, insbesondere solche, die für eine schnelle, parallele Verarbeitung großer Datenmengen ausgelegt sind, etwa ein FPGA (Field Programmable Gate Array) oder eine GPU (Graphics Processing Unit).

Über einen Ausgang 34 kann die 3D-Kamera 10 Tiefenkarten oder andere Messergebnisse ausgeben, beispielsweise Rohbilddaten eines Kameramoduls 14a-b, aber auch Auswertungsergebnisse wie Objektdaten oder die Identifizierung bestimmter Objekte. Speziell in sicherheitstechnischer Anwendung kann das Erkennen eines unzulässigen Eingriffs in Schutzfelder, die in dem Raumbereich 12 definiert wurden, zur Ausgabe eines sicherheitsgerichteten Abschaltsignals führen. Dazu ist der Ausgang 34 dann vorzugsweise als Sicherheitsausgang (OSSD, Output Signal Switching Device) ausgeführt und die 3D-Kamera insgesamt im Sinne einschlägiger Sicherheitsnormen ausfallsicher aufgebaut.

Figur 2 zeigt schematisch die optischen Verhältnisse bei der Erfassung von Tiefenkarten und der Entfernungsberechnung nach dem Stereoskopieprinzip. Die beiden Kameramodule 14a-b mit ihren Bildsensoren 16a-b und als Linsen 18a-b gezeigten Objektiven sind nebeneinander und mit zueinander parallelen optischen Achsen in einem längs einer Basislinie gemessenen Basisabstand b angeordnet. Die Linsen 18a-b haben eine Brennweite f. Ein erfasstes Objekt 36 befindet sich in einer Entfernung, die mit der Objektweite z bezeichnet ist. Durch die unterschiedliche Perspektive der Bildsensoren 16a-b wird eine Struktur des Objekts 36, die beispielsweise mittig auf dem einen Bildsensor 16a abgebildet wird, auf dem anderen Bildsensor 16b um eine Disparität d versetzt abgebildet. Die erfassbaren Entfernungen von *zₘᵢₙ* bis *zₘₐₓ* entsprechen einem Disparitätsbereich 38, innerhalb dessen nach korrespondierenden Bildelementen in den beiden Bildern der Bildsensoren 16a-b gesucht wird. Die Beziehung zwischen Disparität d und Entfernung z ist mit diesen geometrischen Größen als *z=z'b*/*d≈fb*/*d* unter der Voraussetzung gegeben, dass die Objektweite z sehr viel größer als die Bildweite z' ist.

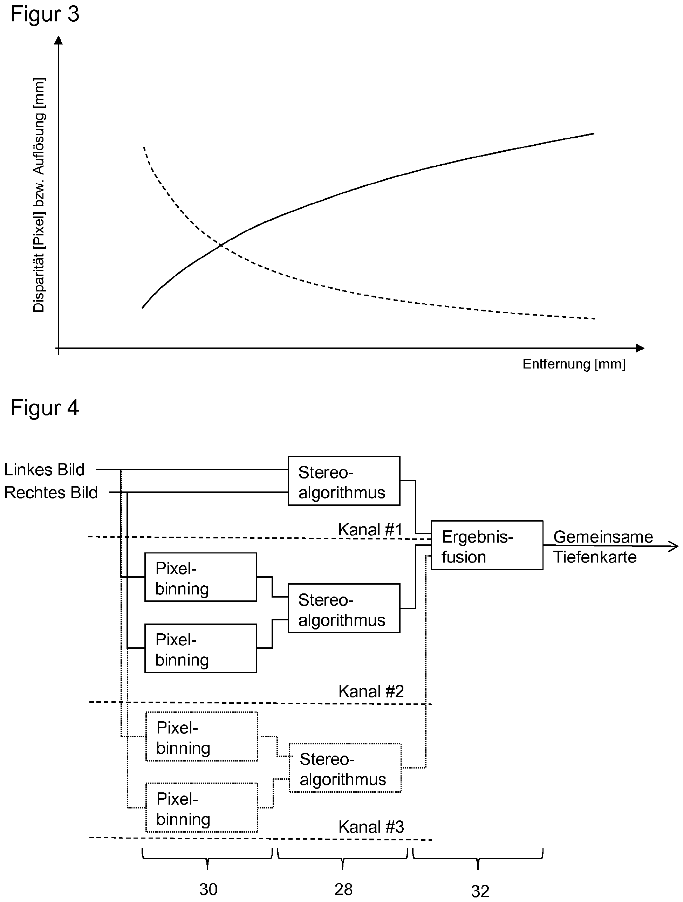

Demnach wächst der Versatz oder die Disparität umgekehrt proportional zur Entfernung beziehungsweise mit *1*/*z* an. Damit steigt der Aufwand zum Auffinden von Korrespondenzen überproportional an, weil ein sehr großer Disparitätsbereich im Extremfall gleich der Pixelzahl pro Zeile der Bildsensorsen 16a-b parallel zu Basislinie ausgewertet werden muss. Gleichzeitig wird die Entfernungsauflösung umso besser, je näher ein Objekt der Stereokamera 10 kommt. Figur 3 illustriert das entfernungsabhängige Verhalten der Disparität (gestrichelte Linie) und der Auflösung (durchgezogene Linie, logarithmisch dargestellt).

Figur 4 zeigt ein Blockdiagramm einer Stereoauswertung mit einem zusätzlichen Tiefenbild aus durch Pixelzusammenfassung entstandenen Zwischenbildern und anschließender Fusionierung. Dadurch wird ermöglicht, auch Korrespondenzen von Objekten 36 im Nahbereich mit einem vergleichsweise kleinen Disparitätsbereich zu erkennen. Die üblicherweise unnötig hohe Entfernungsauflösung im Nahbereich wird dabei reduziert, um beim Aufwand Einsparungen zu erreichen.

Der Auswertungs- und Steuerungseinheit 26 werden in einem Auswertungszyklus zum Erzeugen einer gemeinsamen Tiefenkarte von den Bildsensoren 16a-b zwei Bilder zugeführt, die in Figur 4 als linkes Bild und rechtes Bild bezeichnet sind. Im unteren Teil der Figur 4 ist jeweils die zuständige Untereinheit 28-32 der Auswertungs- und Steuerungseinheit 26 durch ihr Bezugszeichen benannt. Diese Aufgabenverteilung ist beispielhaft und nicht starr zu verstehen, da die Einheiten 28-32 in anderen Ausführungsformen Aufgaben voneinander übernehmen können.

In einem ersten Kanal werden die Ausgangsbilder direkt der Stereoskopieeinheit 30 zugeführt, und dort wird mit Hilfe des Stereoskopiealgorithmus' eine erste Tiefenkarte erzeugt. Dazu wird wie üblich die Disparität in einem zugeordneten Disparitätsbereich ermittelt. Allerdings wird dieser Disparitätsbereich gegenüber einem für den gesamten Entfernungsbereich der 3D-Kamera 10 erforderlichen Disparitätsbereich reduziert, beispielsweise halbiert, so dass von der Tiefenkarte aus dem ersten Kanal nur noch ein relativ ferner, vorzugsweise mittlerer und weiter Entfernungsbereich erfasst ist. Die Einschränkung des Disparitätsbereichs erlaubt eine entsprechende Einsparung an Hardware-Ressourcen beziehungsweise Rechenaufwand in dem ersten Kanal.

Parallel dazu wird in einem zweiten Kanal eine zweite Tiefenkarte berechnet, welche den verbleibenden Nahbereich abdeckt. Hier werden das linke Bild und das rechte Bild der Bildsensoren 16a-b zunächst der Pixelzusammenfassungseinheit 30 zugeführt. Darin erfolgt ein Zusammenfassen ("Binning") von benachbarten Pixeln in einem Pixel-Binning-Block beispielsweise mit je zwei mal zwei Pixeln in horizontaler und vertikaler Richtung zu einem zusammengefassten Pixel. Durch das Zusammenfassen entstehen quasi Pixel größerer Abmessungen ("Downsampling"), wodurch sich die laterale Auflösung der entstehenden Zwischenbilder im Vergleich zu dem linken Bild und dem rechten Bild und folglich auch die Entfernungsauflösung reduziert. Der Wert der zusammengefassten Pixel der Zwischenbilder bestimmt sich aus den Werten der zusammenzufassenden Pixel in linkem Bild und rechtem Bild durch eine Funktion wie Mittelwert, Median, Maximum oder Minimum.

Die Pixelzusammenfassungseinheit 30 übergibt die Zwischenbilder der Stereoskopieeinheit 28, die daraus eine zweite Tiefenkarte reduzierter Auflösung erzeugt. Die Suche nach Pixelkorrespondenzen erfolgt hier vorzugsweise in einem Disparitätsbereich, welcher den noch abzudeckenden nahen Entfernungen entspricht. Aufgrund der Pixel-zusammenfassung ist aber der Aufwand ohnehin verringert, so dass alternativ auch mit einem breiteren oder in einem durch die Gesamtpixelzahl vorgegebenen sinnvollen Rahmen sogar mit einem maximal möglichen Disparitätsbereich gearbeitet werden kann. Die Disparitätsbereiche in den Kanälen sollten jedenfalls vorzugsweise aufeinander abgestimmt werden, damit eine vollständige Abdeckung des geforderten Entfernungsbereichs der 3D-Kamera 10 gewährleistet werden kann.

In weiteren Ausführungsformen können optional ein dritter oder sogar noch weitere Kanäle vorgesehen sein. Diese Kanäle arbeiten im Prinzip wie der zweite Kanal, wobei jeweils eine andere Pixelzusammenfassung implementiert ist und die Disparitätsbereiche entsprechend gewählt und zugeordnet sind, so dass insgesamt der Entfernungsbereich der 3D-Kamera 10 lückenlos, mit oder ohne Überlapp in den Kanälen, abgedeckt wird. In einer weiteren alternativen Ausführungsform wird auch schon im ersten Kanal eine Pixelfusion vorgenommen, die sich dann von der Pixelfusion in den anderen Kanälen unterscheidet.

Die derart in den Kanälen erzeugten beiden oder mehreren Tiefenkarten werden anschließend in der Fusionseinheit 32 miteinander zu einer gemeinsamen Tiefenkarte fusioniert. Tiefenkarten mit reduzierter Auflösung werden vorbereitend auf die höchste Auflösung einer zugeführten Tiefenkarte gebracht, insbesondere die Auflösung des linken Bildes und des rechten Bildes. Das geschieht durch Vervielfältigung der Pixel ("Upsampling", "Pixel Replication"), indem aus jedem Pixel der Tiefenkarte mit reduzierter Auflösung ein Nachbarschaftsblock mit mehreren Pixeln erzeugt wird.

Anschließend werden bei der Fusionierung die Entfernungen der eingehenden Tiefenkarten pixelweise verglichen. Es sind dann verschiedene Fusionierungsstrategien denkbar. Beispielsweise wird für die gemeinsame Tiefenkarte jeweils die am zuverlässigsten berechnete Entfernung gewählt, wobei die Zuverlässigkeit ein zu den Entfernungen pixelweise gespeichertes Qualitätsmaß des Stereoskopiealgorithmus' für die jeweils gefundene Disparität ist, etwa ein Korrelationskoeffizient. Denkbar ist auch, dass in einem Pixel nur eine der Tiefenkarten überhaupt eine gültige Entfernung enthält. Dann können Lücken der einen Tiefenkarte durch Informationen aus der anderen Tiefenkarte oder den anderen Tiefenkarten bei entsprechender Zuverlässigkeit ergänzt werden.

Die Umrechnung von Disparitäten in Entfernungen erfolgt mit den oben zu Figur 2 angegebenen Umrechnungen entweder in der Stereoskopieeinheit 30 für die einzelnen Tiefenkarten oder vorzugsweise erst in der Fusionseinheit 32 aus den jeweils dort gewählten Disparitäten, weil dies weniger Rechenschritte erfordert. Die Fusionseinheit 32 vergleicht dann entgegen dem obigen Sprachgebrauch Disparitäten statt Entfernungen, was aber wegen der monotonen Umrechnungsvorschrift gleichwertig ist.

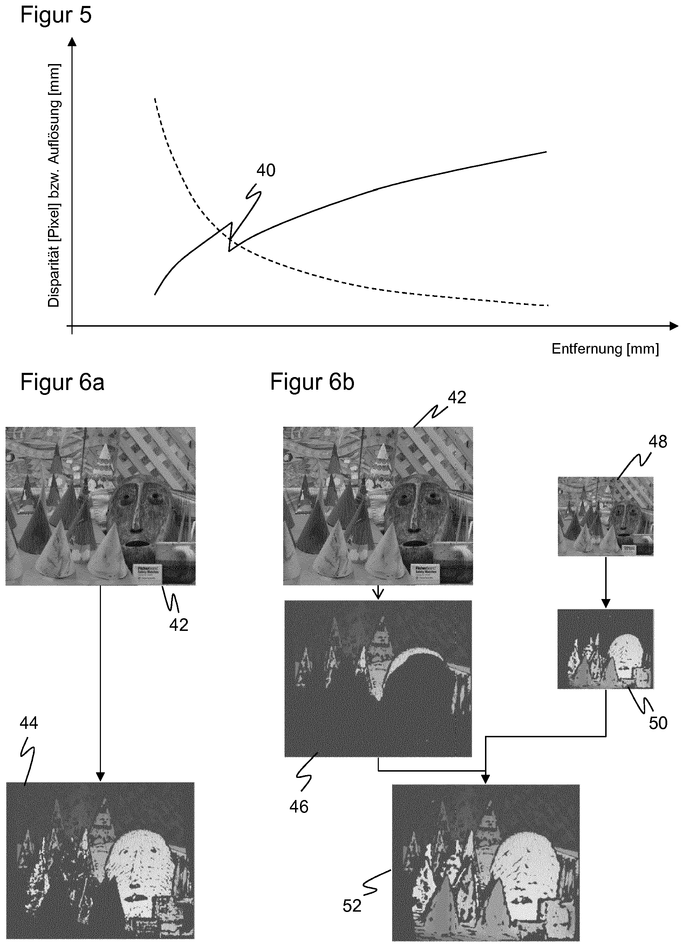

Figur 5 zeigt in einer Darstellung ähnlich Figur 3 das entfernungsabhängige Verhalten der Disparität (gestrichelte Linie) und der Auflösung (durchgezogene Linie) der geteilten Auswertung gemäß Figur 4. Am Übergang 40 der beiden Kanäle ergibt sich ein Sprung in der Auflösung. Die Auflösung wird also nicht stetig mit größerer Nähe besser. Diese höhere Auflösung wird von den meisten Anwendungen ohnehin nicht ausgenutzt, und man kann durch Wahl der Pixelzusammenfassung und der Disparitätsbereiche dafür sorgen, dass auch der Sprung unterhalb einer geforderten Mindestauflösung bleibt.

Figur 6 zeigt abschließend eine Anwendung des geteilten Stereoskopieverfahrens mit Pixelzusammenfassung auf Beispielbilder. Das Beispiel basiert auf Anwendung des erfindungsgemäßen Verfahrens auf einen Datensatz, den die Autoren der Arbeit D. Scharstein und R. Szeliski: "High-accuracy stereo depth maps using structured light", in IEEE Computer Society Conference on Computer Vision and Pattern Recognition (CVPR 2003), Vol. 1, Seiten 195-202, Madison, WI, Juni 2003 freundlicherweise auf ihrer Webseite zur Verwendung und Publikation zur Verfügung stellen. Dabei stellt Figur 6a zum Vergleich eine herkömmliche Auswertung mit breitem Disparitätsbereich von 64 Pixeln und Figur 6b eine geteilte Auswertung mit für beide Kanäle halbiertem Disparitätsbereich von 32 Pixeln dar.

Bei dem herkömmlichen Verfahren gemäß Figur 6a wird aus dem Ausgangsbild, von dem stellvertretend das linke Bild 42 gezeigt ist, durch den Stereoskopiealgorithmus direkt die zu bestimmende Tiefenkarte 44 erzeugt.

Figur 6b zeigt in der linken Spalte das gleiche linke Bild 42, aus dem im ersten Kanal bei gegenüber Figur 6a halbiertem Disparitätsbereich eine erste Tiefenkarte 46 erzeugt wird. Deutlich erkennbar weist die erste Tiefenkarte 46 gegenüber der Tiefenkarte 44 aus Figur 6a Lücken im Nahbereich auf, weil Korrespondenzen im Nahbereich wegen des verkleinerten Disparitätsbereichs nicht erkannt werden. In der rechten Spalte der Figur 6b ist zunächst oben das im zweiten Kanal in der Pixelzusammenfassungseinheit 30 aus dem linken Bild 42 erzeugte Zwischenbild 48 reduzierter Auflösung gezeigt, in dem jeweils 2*2 Pixel zu einem Pixel zusammengefasst sind. Aus den Zwischenbildern 48 berechnet die Stereoskopieeinheit 28 eine zweite Tiefenkarte 50 entsprechend reduzierter Auflösung. Man erkennt hier komplementär zu der ersten Tiefenkarte 46 Strukturen im Nahbereich und dafür Lücken im Fernbereich.

Aus der ersten Tiefenkarte 46 und der zweiten Tiefenkarte 50 erzeugt die Fusionseinheit 32 eine gemeinsame Tiefenkarte 52. Dabei werden in erster Linie gegenseitige Lücken aufgefüllt. Für Pixel, in denen beide Tiefenkarten 46, 50 einen Entfernungswert angeben, muss eine Entscheidung getroffen werden oder eine Verrechnung erfolgen, beispielsweise anhand eines Gütemaßes des Stereoalgorithmus'. Der Zwischenschritt, bei dem die Auflösung der zweiten Tiefenkarte 50 durch Vervielfältigung jedes ihrer Pixel zu einem 2*2-Pixelblock erhöht wird, ist in Figur 6b nicht dargestellt. Man erkennt sofort, dass die gemeinsame Tiefenkarte 52 die Szenerie erheblich besser wiedergibt als jede einzelne Tiefenkarte 46, 50. Insbesondere hätte eine schlichte Halbierung des Disparitätsbereichs bei einem herkömmlichen Verfahren gravierende Auswirkungen, wie ein Blick auf die erste Tiefenkarte 46 gegenüber den Tiefenkarten 44, 52 erkennen lässt.

Der Vergleich der herkömmlich mit breitem Disparitätsbereich erzeugten Tiefenkarten 44 und der gemeinsamen Tiefenkarte 52 zeigt an manchen Stellen einen gewissen Auflösungsverlust im Nahbereich. Dieser Auflösungsverlust ist, wie mehrfach erwähnt, in der Praxis meist ohne Belang. Dafür löst nur die gemeinsame Tiefenkarte 52 besonders nahe Strukturen überhaupt auf, weil der angepasste Disparitätsbereich, auf die Zwischenbilder angewandt, näher an die 3D-Kamera 10 herankommt. Vor allem ist der Aufwand für die halbierten Disparitätsbereiche erheblich reduziert. Das ist besonders nützlich, wenn die Auswertung der Kanäle sequentiell durchgeführt wird.

## Patentansprüche

1. 3D-Kamera (10) nach dem Stereoskopieprinzip zur Erfassung von Tiefenkarten (52) eines Überwachungsbereichs (12), die mindestens zwei Kameramodule (14a-b) mit jeweils einem Bildsensor (16a-b) in zueinander versetzter Perspektive zur Aufnahme von zweidimensionalen Ausgangsbildern (42),
eine Stereoskopieeinheit (28), die für die Anwendung eines Stereoskopiealgorithmus' zur Erzeugung einer Tiefenkarte (46, 50) ausgebildet ist, indem einander zugehörige Teilbereiche in zwei aus versetzter Perspektive aufgenommenen zweidimensionalen Bildern innerhalb eines Disparitätsbereichs erkannt werden und deren Entfernung anhand der Disparität berechnet wird, wobei der Disparitätsbereich einen Suchbereich festlegt, wie weit Bildelemente in den beiden Bildern maximal auseinander liegen können,
eine Pixelzusammenfassungseinheit (30), um durch Zusammenfassen jeweils mehrerer Pixel aus einem zweidimensionalen Bild (42) ein zweidimensionales Zwischenbild (48) geringerer Auflösung zu erzeugen, und
eine Fusionseinheit (32) aufweist, welche mindestens eine erste Tiefenkarte (46) und eine zweite Tiefenkarte (50) zu einer gemeinsamen Tiefenkarte (52) fusioniert, wobei mindestens die zweite Tiefenkarte (50) aus Zwischenbildern (48) erzeugt ist,
**dadurch gekennzeichnet,**
**dass** die Stereoskopieeinheit (28) die erste Tiefenkarte (46) für den Fernbereich mit einem Disparitätsbereich erzeugt, der gegenüber einem für einen gesamten Entfernungsbereich der 3D-Kamera (10) erforderlichen Disparitätsbereich reduziert ist, und die zweite Tiefenkarte mit einem abgestimmten Disparitätsbereich erzeugt, welcher noch abzudeckenden nahen Entfernungen entspricht.

2. 3D-Kamera (10) nach Anspruch 1,
wobei die Stereoeinheit (28) mehrkanalig aufgebaut ist, um die erste Tiefenkarte (46) und die zweite Tiefenkarte (50) parallel zu berechnen.

3. 3D-Kamera (10) nach Anspruch 1 oder 2,
wobei die Pixelzusammenfassungseinheit (30) dafür ausgebildet ist, jeweils rechteckige oder quadratische Nachbarschaftsbereiche von Pixeln zu einem Pixel zusammenzufassen.

4. 3D-Kamera (10) nach einem der vorhergehenden Ansprüche,
wobei die Pixelzusammenfassungseinheit (30) dafür ausgebildet ist, ein zusammengefasstes Pixel auf einen Mittelwert, Maximum, Minimum oder Median der zusammenzufassenden Pixel zu setzen.

5. 3D-Kamera (10) nach einem der vorhergehenden Ansprüche,
wobei die Stereoskopieeinheit (28) dafür ausgebildet ist, ein Verlässlichkeitsmaß für die berechneten Entfernungen zu bestimmen.

6. 3D-Kamera (10) nach Anspruch 5,
wobei die Fusionseinheit (32) dafür ausgebildet ist, in die gemeinsame Tiefenkarte (52) jeweils die am zuverlässigsten bestimmte Entfernung aus den beiden Tiefenkarten (46, 50) zu übernehmen.

7. 3D-Kamera (10) nach einem der vorhergehenden Ansprüche,
wobei die Fusionseinheit (32) dafür ausgebildet ist, soweit vorhanden Entfernungen der am höchsten aufgelösten Tiefenkarte (46) in die gemeinsame Tiefenkarte (52) zu übernehmen und aus einer niedriger aufgelösten Tiefenkarte (50) nur Lücken zu füllen.

8. 3D-Kamera (10) nach einem der vorhergehenden Ansprüche,
wobei die Fusionseinheit (32) dafür ausgebildet ist, die Auflösung einer Tiefenkarte (50) durch Vervielfältigen von Pixeln zu erhöhen.

9. 3D-Kamera (10) nach einem der vorhergehenden Ansprüche,
wobei die Fusionseinheit (32) dafür ausgebildet ist, drei oder mehr Tiefenkarten (46, 50) unterschiedlicher Auflösung zu fusionieren.

10. Verfahren zur Erfassung von Tiefenkarten (52) eines Überwachungsbereichs (12) mittels eines Stereoskopiealgorithmus', der einander zugehörige Teilbereiche in zwei aus versetzter Perspektive aufgenommenen zweidimensionalen Bildern (42) des Überwachungsbereichs (12) innerhalb eines Disparitätsbereichs erkennt und eine zugehörige Entfernung anhand der Disparität berechnet, wobei der Disparitätsbereich einen Suchbereich festlegt, wie weit Bildelemente in den beiden Bildern maximal auseinander liegen können, wobei aus den zweidimensionalen Bildern (42) durch Zusammenfassen mehrerer Pixel zweidimensionale Zwischenbilder (48) geringerer Auflösung erzeugt werden und eine gemeinsame Tiefenkarte (52) aus mindestens einer ersten Tiefenkarten (46) und einer zweiten Tiefenkarte (50) fusioniert wird, wobei mindestens die zweite Tiefenkarte (50) aus Zwischenbildern (48) erzeugt ist,
**dadurch gekennzeichnet,**
**dass** die erste Tiefenkarte (46) für den Fernbereich mit einem Disparitätsbereich erzeugt wird, der gegenüber einem für einen gesamten Entfernungsbereich der 3D-Kamera (10) erforderlichen Disparitätsbereich reduziert ist, und die zweite Tiefenkarte mit einem abgestimmten Disparitätsbereich erzeugt wird, welcher noch abzudeckenden nahen Entfernungen entspricht.

## Claims

1. A 3D camera (10) in accordance with the stereoscopic principle for detecting depth maps (52) of a monitored zone (12) which comprises
at least two camera modules (14a-b) each having an image sensor (16a-b) in mutually offset perspectives for taking two-dimensional starting images (42), a stereoscopic unit (28) which is configured for the application of a stereoscopic algorithm for generating a depth map (46, 50), in that mutually associated part zones are recognized in two two-dimensional images within a disparity zone taken from offset perspectives and their distance is calculated with reference to the disparity,
wherein the disparity zone defines a search range of how far image elements in the two images may maximally be offset from one another,
a pixel binning unit (30) for generating a two-dimensional intermediate image (48) of lower resolution by binning a respective plurality of pixels from a two-dimensional image (42), and
a fusion unit (32) which fuses at least a first depth map (46) and a second depth map (50) to form a common depth map (52), with at least the second depth map (50) being generated from intermediate images (48),
**characterized in that** the stereoscopic unit (28) generates the first depth map (46) for the far range with a disparity zone which is reduced with respect to a disparity zone necessary for the entire distance range of the 3D camera (10), and generates the second depth map with a matching disparity zone corresponding to near distances still to be covered.

2. The 3D camera (10) in accordance with claim 1,
wherein the stereo unit (28) is configured with multiple channels for calculating the first depth map (46) and the second depth map (50) in parallel.

3. The 3D camera (10) in accordance with claim 1 or 2,
wherein the pixel binning unit (30) is configured to bin respective rectangular or quadratic neighborhood regions of pixels to form one pixel.

4. The 3D camera (10) in accordance with any of the preceding claims,
wherein the pixel binning unit (30) is configured to set a binned pixel to a mean value, to a maximum, to a minimum or to a median of the pixels to be binned.

5. The 3D camera (10) in accordance with any of the preceding claims,
wherein the stereoscopic unit (28) is configured to determine a reliability measure for the calculated distances.

6. The 3D camera (10) in accordance with claim 5,
wherein the fusion unit (32) is configured to take over the respective most reliably determined distance from the two depth maps (46, 50) into the common depth map (52).

7. The 3D camera (10) in accordance with any of the preceding claims,
wherein the fusion unit (32) is configured to take distances from highest resolution depth map (46), insofar as they exist, into the common depth map (52) and to only fill gaps from a lower resolution depth map (50).

8. The 3D camera (10) in accordance with any of the preceding claims,
wherein the fusion unit (32) is configured to increase the resolution of a depth map (50) by duplication of pixels.

9. The 3D camera (10) in accordance with any of the preceding claims,
wherein the fusion unit (32) is configured to fuse three or more depth maps (46, 50) of different resolution.

10. A method of detecting depth maps (52) of a monitored zone (12) by means of a stereoscopic algorithm which recognizes, within a disparity zone, mutually associated part regions in two two-dimensional images (42) of the monitored zone (12) taken from offset perspectives and calculates an associated distance with reference to the disparity, wherein the disparity zone defines a search range of how far image elements in the two images may maximally be offset from one another,
wherein two-dimensional intermediate images (48) of lower resolution are generated from the two-dimensional images (42) by binning a plurality of pixels, and wherein a common depth map (52) is fused from at least a first depth map (46) and a second depth map (50), with at least the second depth map (50) being generated from intermediate images (48),
**characterized in that** the first depth map (46) for the far range is generated with a disparity zone which is reduced with respect to a disparity zone necessary for the entire distance range of the 3D camera (10), and the second depth map is generated with a matching disparity zone corresponding to near distances still to be covered.

## Revendications

1. Caméra 3D (10) selon le principe de stéréoscopie pour la détection de cartes en profondeur (52) d'une zone surveillée (12), qui comprend
au moins deux modules de caméra (14a-b) avec chacune un capteur d'imagerie (16a-b) dans des perspectives décalées l'une par rapport à l'autre pour enregistrer des images de départ bidimensionnelle (42),
une unité de stéréoscopie (28), qui est réalisée pour l'application d'un algorithme de stéréoscopie pour engendrer une carte de profondeur (46, 50), en reconnaissant des zones partielles mutuellement associées dans deux images bidimensionnelles enregistrées depuis des perspectives décalées, à l'intérieur d'une plage de disparité, et en calculant leur éloignement en se rapportant à la disparité, dans laquelle la plage de disparité fixe une zone de recherche, selon l'éloignement auquel des éléments d'image dans les deux images peuvent être au maximum écartés les uns des autres,
une unité de regroupement de pixels (30) afin d'engendrer, par regroupement de plusieurs pixels provenant respectivement d'une image bidimensionnelle (42), une image intermédiaire bidimensionnelle (42) de plus faible résolution,
et une unité de fusion, laquelle fusionne au moins une première carte de profondeur (46) et une seconde carte de profondeur (50) pour donner une carte de profondeur commune (52), dans lesquelles au moins la seconde carte de profondeur (50) est engendrée à partir d'images intermédiaires,
**caractérisée en ce que**
l'unité de stéréoscopie (28) engendre la première carte de profondeur (46) pour la plage lointaine avec une plage de disparité qui est réduite par rapport à une plage de disparité nécessaire pour une zone d'éloignement totale de la caméra 3D (10), et engendre la seconde carte de profondeur avec une plage de disparité accordée, qui correspond à des éloignements proches qu'il s'agit encore de couvrir.

2. Caméra 3D (10) selon la revendication 1,
dans laquelle l'unité de stéréoscopie (28) est réalisée avec plusieurs canaux, afin de de calculer en parallèle la première carte de profondeur (46) et la seconde carte de profondeur (50).

3. Caméra 3D (10) selon la revendication 1 ou 2,
dans laquelle l'unité de regroupement de pixels (30) est réalisée pour regrouper des zones de pixels de voisinage rectangulaires ou carrées pour donner un seul pixel.

4. Caméra 3D (10) selon l'une des revendications précédentes,
dans laquelle l'unité de regroupement de pixels (30) est réalisée pour imposer à un pixel regroupé une valeur moyenne, une valeur maximum, une valeur minimum ou une valeur médiane des pixels à regrouper.

5. Caméra 3D (10) selon l'une des revendications précédentes,
dans lequel l'unité de stéréoscopie (28) est réalisée pour déterminer un degré de fiabilité pour les éloignements calculés.

6. Caméra 3D (10) selon la revendication 5,
dans laquelle l'unité de fusion (32) est réalisée pour reprendre dans la carte de profondeur commune (52) l'éloignement respectif qui a été déterminé comme étant le plus fiable à partir des deux cartes de profondeur (46, 50).

7. Caméra 3D (10) selon l'une des revendications précédentes,
dans laquelle l'unité de fusion (32) est réalisée pour reprendre dans la carte de profondeur commune (52) des éloignements, dans la mesure où ils existent, de la carte de profondeur avec la plus haute résolution (46), et pour remplir uniquement des lacunes à partir d'une carte de profondeur avec une plus faible résolution (50).

8. Caméra 3D (10) selon l'une des revendications précédentes,
dans laquelle l'unité de fusion (32) est réalisée pour augmenter la résolution d'une carte de profondeur (50) par multiplication de pixels.

9. Caméra 3D (10) selon l'une des revendications précédentes,
dans laquelle l'unité de fusion (32) est réalisée pour fusionner trois ou plusieurs cartes de profondeur (46, 50) de résolutions différentes.

10. Procédé pour détecter des cartes de profondeur (52) d'une zone surveillée (12) au moyen d'un algorithme de stéréoscopie, qui reconnaît des zones partielles mutuellement associées dans deux images bidimensionnelles enregistrées depuis des perspectives décalées, à l'intérieur d'une plage de disparité, et qui calcule leur éloignement en se rapportant à la disparité, dans lequel la plage de disparité fixe une zone de recherche, selon l'éloignement auquel des éléments d'image dans les deux images peuvent être au maximum écartés les uns des autres, dans lequel on engendre à partir des images bidimensionnelles (42) et par regroupement de plusieurs pixels des images intermédiaires bidimensionnelles (48) de plus faible résolution et on fusionne une carte de profondeur commune (52) à partir d'au moins une première carte de profondeur (46) et une seconde carte de profondeur (50), dans lequel au moins la seconde carte de profondeur (50) est engendrée à partir d'images intermédiaires (48),
**caractérisé en ce que** la première carte de profondeur (46) pour la zone éloignée est engendrée avec une plage de disparité, qui est réduite par rapport à une plage de disparité nécessaire pour une zone d'éloignement totale de la caméra 3D (10), et la seconde carte de profondeur est engendrée avec une plage de disparité accordée, qui correspond à des éloignements proches qu'il s'agit encore de couvrir.
